# EUROPEAN PATENT APPLICATION

(11) **EP 2 905 979 A1**
(43) Date of publication of application: **12.08.2015**
(21) Application number: 13848840.8
(22) Date of filing: 23.10.2013
(51) Int. Cl.: H04W 4/24

(54) **CHARGE CONTROL METHOD, DEVICE AND SYSTEM FOR ROAMING USER DATA SERVICE**

(30) Priority: 26.10.2012 CN 201210416974
(71) Applicant: Huawei Technologies Co., Ltd., Longgang District Shenzhen, Guangdong 518129 (CN)
(72) Inventor: ZENG, Guangzhu, Shenzhen Guangdong 518129 (CN); WANG, Xing, Shenzhen Guangdong 518129 (CN)
(74) Representative: Thun, Clemens
(86) International application number: PCT/CN2013/085794
(87) International publication number: WO 2014/063629

(57) **Abstract**

The present invention provides a charging control method, device, and system for a data service of a roaming subscriber. A VP-GW receives a service request message from a UE, where the service request message includes a home carrier identifier; and sends a charging rule request message to a home policy and charging system according to the home carrier identifier, so that the home policy and charging system generates a charging rule and sends the charging rule to a visited policy and charging system, and the visited policy and charging system implements charging according to the charging rule.

## Description

This application claims priority to Chinese Patent Application No. 201210416974.9, filed with the Chinese Patent Office on October 26, 2012 and entitled "CHARGING CONTROL METHOD, DEVICE, AND SYSTEM FOR DATA SERVICE OF ROAMING SUBSCRIBER", which is incorporated herein by reference in its entirety.

### TECHNICAL FIELD

The present invention relates to mobile communications technologies, and in particular, to a charging control method, device, and system for a data service of a roaming subscriber.

### BACKGROUND

With the development of wireless communications technologies, more mobile subscribers adopt mobile communications devices to use a data service. For example, a subscriber adopts a mobile communications device to download a picture, a song, and an ebook or download a virtual subscriber identity module (SIM) card in a software mode.

When a mobile subscriber uses a data service, data traffic of the subscriber needs to be charged in a process of using the data service. Currently, a mobile subscriber in a roaming state is referred to as a roaming subscriber. If a roaming subscriber uses a data service, a charging control manner is as follows: A visited public data network gateway (VP-GW) receives, from a user equipment (User Equipment, UE for short), a message for requesting access to data service unit, and then sends a data service request message to a visited application function (Visit Application Function, VAF for short); the VAF sends a charging parameter and a policy parameter to a visited policy and charging rules function (VPCRF); the VPCRF generates, according to the foregoing parameters, a charging rule and a service policy that are corresponding to the data service, and delivers the charging rule and the service policy to a visited policy and charging enforcement function (Visit Policy and Charging Enforcement Function, VPCEF for short); and the VPCEF executes a charging operation according to the charging rule.

According to the foregoing existing charging control method for a data service of a roaming subscriber, a charging rule and a corresponding tariff bill are completely generated by a visited carrier. Because charging cannot be performed according to a charging rule agreed between the roaming subscriber and a home carrier, charging accuracy is poor.

### SUMMARY

A first aspect of the present invention provides a charging control method for a data service of a roaming subscriber, which is used to overcome a disadvantage in the prior art and improve charging accuracy.

Another aspect of the present invention provides a UE, a VP-GW, a HAF, and an HPCRF, which are used to overcome a disadvantage in the prior art and improve charging accuracy.

Still another aspect of the present invention provides a charging control system for a data service of a roaming subscriber, which is used to overcome a disadvantage in the prior art and improve charging accuracy.

A first aspect of the present invention provides a charging control method for a data service of a roaming subscriber, including:
sending a service request message to a visited public data network gateway VP-GW, where the service request message includes a home carrier identifier, so that the VP-GW sends a charging rule request message to a home policy and charging system according to the home carrier identifier, the home policy and charging system generates a charging rule and sends the charging rule to a visited policy and charging system, and the visited policy and charging system implements charging according to the charging rule.

According to the aspect or any implementation manner described above, an implementation manner is further provided as follows: the service request message further includes a service identifier, so that the VP-GW determines, before sending the charging rule request message to the home policy and charging system according to the home carrier identifier, whether the service identifier is a preset service identifier, and if yes, the VP-GW sends the charging rule request message to the home policy and charging system according to the home carrier identifier.

Another aspect of the present invention provides a charging control method for a data service of a roaming subscriber, including:
receiving a service request message from a user equipment UE, where the service request message includes a home carrier identifier; and
sending a charging rule request message to a home policy and charging system according to the home carrier identifier, so that the home policy and charging system generates a charging rule and sends the charging rule to a visited policy and charging system, and the visited policy and charging system implements charging according to the charging rule.

According to the aspect or any implementation manner described above, an implementation manner is further provided as follows:
the service request message further includes a service identifier; and
before the sending a charging rule request message to a home policy and charging system according to the home carrier identifier, the method further includes: determining whether the service identifier is a preset service identifier, and if yes, executing the step of sending a charging rule request message to a home policy and charging system according to the home carrier identifier.

According to the aspect or any implementation manner described above, an implementation manner is further provided as follows: after the receiving a service request message from a UE, the method further includes:
sending a service policy request message to the home policy and charging system according to the home carrier identifier, so that the home policy and charging system generates a service policy and sends the service policy to the visited policy and charging system, and the visited policy and charging system implements service control according to the service policy.

According to the aspect or any implementation manner described above, an implementation manner is further provided as follows: after the receiving a service request message from a UE, the method further includes:
sending a service policy request message to the visited policy and charging system, so that the visited policy and charging system generates a service policy and implements service control according to the service policy.

Another aspect of the present invention provides a charging control method for a data service of a roaming subscriber, including:
receiving a charging rule request message from a visited public data network gateway VP-GW, where the charging rule request message is sent by the VP-GW according to a home carrier identifier after a service request message that includes the home carrier identifier and is sent by a user equipment UE is received; and
generating a charging rule according to a preset charging parameter, and sending the charging rule to a visited policy and charging system, so that the visited policy and charging system implements charging according to the charging rule.

According to the aspect or any implementation manner described above, an implementation manner is further provided as follows: the method further includes:
receiving a service policy request message from the VP-GW, where the service policy request message is sent by the VP-GW according to the home carrier identifier after the service request message that includes the home carrier identifier and is sent by the UE is received; and
generating a service policy according to a preset policy parameter and sending the service policy to the visited policy and charging system, so that the visited policy and charging system implements service control according to the service policy.

Another aspect of the present invention provides a charging control method for a data service of a roaming subscriber, including:
receiving a service request message from a user equipment UE, where the service request message includes a home carrier identifier and a service identifier;
if it is determined, according to the service identifier, that a data service corresponding to the service request message needs to access a virtual subscriber identity module SIM server, sending a charging rule request message to a home policy and charging system according to the home carrier identifier, so that the home policy and charging system generates a charging rule and sends the charging rule to a visited policy and charging system, and the visited policy and charging system implements charging according to the charging rule; and
exchanging data between the UE and the virtual SIM server.

Another aspect of the present invention provides a user equipment UE, including:
a processor, configured to generate a service request message, where the service request message includes a home carrier identifier; and
a sender, configured to send the service request message to a visited public data network gateway VP-GW, so that the VP-GW sends a charging rule request message to a home policy and charging system according to the home carrier identifier, the home policy and charging system generates a charging rule and sends the charging rule to a visited policy and charging system, and the visited policy and charging system implements charging according to the charging rule.

According to the aspect or any implementation manner described above, an implementation manner is further provided as follows: the service request message generated by the processor further includes a service identifier, so that the VP-GW determines, before sending the charging rule request message to the home policy and charging system according to the home carrier identifier, whether the service identifier is a preset service identifier, and if yes, the VP-GW sends the charging rule request message to the home policy and charging system according to the home carrier identifier.

Another aspect of the present invention provides a gateway device, including:
a receiver, configured to receive a service request message from a user equipment UE, where the service request message includes a home carrier identifier; and
a first sender, configured to send a charging rule request message to a home policy and charging system according to the home carrier identifier, so that the home policy and charging system generates a charging rule and sends the charging rule to a visited policy and charging system, and the visited policy and charging system implements charging according to the charging rule.

According to the aspect or any implementation manner described above, an implementation manner is further provided as follows:
the service request message received by the receiver further includes a service identifier; and
the network gateway further includes: a controller and a second sender, where the controller is configured to determine whether the service identifier is a preset service identifier, and if yes, control the first sender to send, according to the home carrier identifier, the charging rule request message to the home policy and charging system.

According to the aspect or any implementation manner described above, an implementation manner is further provided as follows:
the first sender is further configured to send a service policy request message to the home policy and charging system according to the home carrier identifier, so that the home policy and charging system generates a service policy and sends the service policy to the visited policy and charging system, and the visited policy and charging system implements service control according to the service policy.

According to the aspect or any implementation manner described above, an implementation manner is further provided as follows:
the second sender is further configured to send a service policy request message to the visited policy and charging system, so that the visited policy and charging system generates a service policy and the visited policy and charging system implements service control according to the service policy.

Another aspect of the present invention provides a home policy and charging system, including:
a home application function HAF, configured to receive a charging rule request message from a visited public data network gateway VP-GW, and send a charging parameter to a home policy and charging rules function HPCRF according to the charging rule request message, where the charging rule request message is sent by the VP-GW according to a home carrier identifier after a service request message that includes the home carrier identifier and is sent by a user equipment UE is received; and
the HPCRF, configured to generate a charging rule according to the charging parameter, and send the charging rule to a visited policy and charging system, so that the visited policy and charging system implements charging according to the charging rule.

According to the aspect or any implementation manner described above, an implementation manner is further provided as follows:
the HAF is further configured to receive a service policy request message from the VP-GW, and send a policy parameter to the HPCRF according to the service policy request message, where the service policy request message is sent by the VP-GW according to the home carrier identifier after the service request message that includes the home carrier identifier and is sent by the UE is received; and
the HPCRF is further configured to generate a service policy according to the policy parameter and send the service policy to the visited policy and charging system, so that the visited policy and charging system implements service control according to the service policy.

Another aspect of the present invention provides a gateway device, including:
a receiver, configured to receive a service request message from a user equipment UE, where the service request message includes a home carrier identifier and a service identifier;
a controller, configured to determine, according to the service identifier, whether a data service corresponding to the service request message needs to access a virtual subscriber identity module SIM server;
a sender, configured to, when the data service corresponding to the service request message needs to access the virtual SIM server, send a charging rule request message to a home policy and charging system according to the home carrier identifier, so that the home policy and charging system generates a charging rule and sends the charging rule to a visited policy and charging system, and the visited policy and charging system implements charging according to the charging rule; and
a data exchanger, configured to exchange data between the UE and the virtual SIM server.

According to the foregoing content of the present invention, when a UE is in a roaming state, a VP-GW sends a charging rule request message to a home policy and charging system of the UE; and a home carrier generates a charging rule and then forwards the charging rule to a visited carrier for implementing charging, so that charging can be performed in a charging manner agreed between the UE and the home carrier, thereby improving charging accuracy.

### BRIEF DESCRIPTION OF DRAWINGS

To describe the technical solutions in the embodiments of the present invention or the prior art more clearly, the following briefly introduces the accompanying drawings required for describing the embodiments or the prior art. Apparently, the accompanying drawings in the following description merely show some embodiments of the present invention, and persons of ordinary skill in the art may still derive other drawings from these accompanying drawings without creative efforts.
FIG. 1 is a flowchart of a charging control method for a data service of a roaming subscriber according to Embodiment 1 of the present invention;
FIG. 2 is a flowchart of a charging control method for a data service of a roaming subscriber according to Embodiment 2 of the present invention;
FIG. 3 is a flowchart of a charging control method for a data service of a roaming subscriber according to Embodiment 3 of the present invention;
FIG. 4 is a flowchart of a charging control method for a data service of a roaming subscriber according to Embodiment 4 of the present invention;
FIG. 5 is a signaling flowchart of a charging control method for a data service of a roaming subscriber according to Embodiment 5 of the present invention;
FIG. 6 is a signaling flowchart of a charging control method for a data service of a roaming subscriber according to Embodiment 6 of the present invention;
FIG. 7 is a schematic structural diagram of a UE according to Embodiment 7 of the present invention;
FIG. 8 is a schematic structural diagram of a gateway device according to Embodiment 8 of the present invention;
FIG. 9 is a schematic structural diagram of a HAF according to Embodiment 9 of the present invention;
FIG. 10 is a schematic structural diagram of an HPCRF according to Embodiment 10 of the present invention; and
FIG. 11 is a schematic structural diagram of a home policy and charging system according to Embodiment 11 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

A charging control method for a data service of a roaming subscriber provided in the present invention relates to a UE, a VP-GW, a home policy and charging system, and a visited policy and charging system. The home policy and charging system includes at least: a home application function (HAF) and a home policy and charging rules function (HPCRF). The visited policy and charging system includes at least: a VPCRF and a VPCEF. Further, the system may further include a VAF.

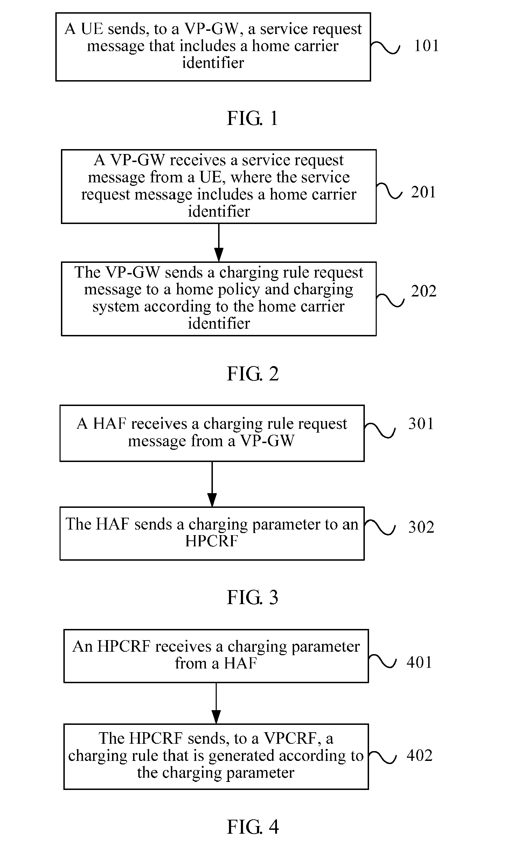

FIG. 1 is a flowchart of a charging control method for a data service of a roaming subscriber according to Embodiment 1 of the present invention. As shown in FIG. 1, the method includes the following process:

Step 101: A UE sends, to a VP-GW, a service request message that includes a home carrier identifier.

In this step, the UE sends, to the VP-GW, the service request message that includes the home carrier identifier, so that the VP-GW sends a charging rule request message to a home policy and charging system according to the home carrier identifier, the home policy and charging system generates a charging rule and sends the charging rule to a visited policy and charging system, and the visited policy and charging system implements charging according to the charging rule. Specifically, to enable the VP-GW to send the charging rule request message to a HAF according to the home carrier identifier, an HPCRF generates a charging rule according to a charging parameter from the HAF and sends the charging rule to a VPCRF, and a VPCEF implements charging according to the charging rule that is forwarded by the VPCRF.

On the basis of the foregoing technical solution, further, the foregoing service request message may further include a service identifier. The service request message includes the service identifier, so that the VP-GW determines, before sending the charging rule request message to the home policy and charging system according to the home carrier identifier, whether the service identifier is a preset service identifier, if yes, the VP-GW sends the charging rule request message to the home policy and charging system according to the home carrier identifier, and if no, the VP-GW sends the charging rule request message to the visited policy and charging system.

In Embodiment 1 of the present invention, when a UE is in a roaming state, a VP-GW sends a charging rule request message to a home policy and charging system of the UE; and a home carrier generates a charging rule and then forwards the charging rule to a visited carrier for implementing charging, so that charging can be performed in a charging manner agreed between the UE and the home carrier, thereby improving charging accuracy.

FIG. 2 is a flowchart of a charging control method for a data service of a roaming subscriber according to Embodiment 2 of the present invention. As shown in FIG. 2, the method includes the following process:
Step 201: A VP-GW receives a service request message from a UE, where the service request message includes a home carrier identifier.
Step 202: The VP-GW sends a charging rule request message to a home policy and charging system according to the home carrier identifier.

In this step, the VP-GW sends the charging rule request message to the home policy and charging system according to the home carrier identifier, so that the home policy and charging system generates a charging rule and sends the charging rule to a visited policy and charging system, and the visited policy and charging system implements charging according to the charging rule. Specifically, the VP-GW sends the charging rule request message to a HAF according to the home carrier identifier, so that, an HPCRF generates a charging rule according to a charging parameter from the HAF and sends the charging rule to a VPCRF, and a VPCEF implements charging according to the charging rule that is forwarded by the VPCRF.

On the basis of the foregoing technical solution, further, the foregoing service request message may further include a service identifier. Before step 202, the method may further include: The VP-GW determines whether the service identifier is a preset service identifier, if yes, step 202 is performed, and if no, the VP-GW sends the charging rule request message to the visited policy and charging system.

On the basis of the foregoing technical solution, further, after step 201, the method may further include: The VP-GW sends a service policy request message to the home policy and charging system according to the home carrier identifier. In this step, the VP-GW sends the service policy request message to the home policy and charging system according to the home carrier identifier, so that the home policy and charging system generates a service policy and sends the service policy to the visited policy and charging system, and the visited policy and charging system implements service control according to the service policy. Specifically, the VP-GW sends the service policy request message to the HAF according to the home carrier identifier, so that, the HPCRF generates a service policy according to a policy parameter from the HAF and sends the service policy to the VPCRF, and the VPCEF implements service control according to the service policy that is forwarded by the VPCRF.

Alternatively, after step 201, the method may further include: The VP-GW sends a service policy request message to the visited policy and charging system. In this step, the VP-GW sends the service policy request message to the visited policy and charging system, so that the visited policy and charging system generates a service policy and implements service control according to the service policy. Specifically, the VP-GW sends the service policy request message to a VAF, so that, by means of sending the service policy request message to the VAF, the VPCRF generates a service policy according to a policy parameter from the VAF, and the VPCEF implements service control according to the service policy that is generated by the VPCRF.

In Embodiment 2 of the present invention, when a UE is in a roaming state, a VP-GW sends a charging rule request message to a home policy and charging system of the UE; and a home carrier generates a charging rule and then forwards the charging rule to a visited carrier for implementing charging, so that charging can be performed in a charging manner agreed between the UE and the home carrier, thereby improving charging accuracy.

The following introduces operations of a home policy and charging system in the charging control method for a data service of a roaming subscriber according to this embodiment of the present invention.

First, the home policy and charging system receives a charging rule request message from a VP-GW. The charging rule request message is sent by the VP-GW according to a home carrier identifier after a service request message that includes the home carrier identifier and is sent by a UE is received.

Then, the home policy and charging system generates a charging rule according to a preset charging parameter, and sends the charging rule to a visited policy and charging system, so that the visited policy and charging system implements charging according to the charging rule.

Further, the home policy and charging system may further receive a service policy request message from the VP-GW, where the service policy request message is sent by the VP-GW according to the home carrier identifier after the service request message that includes the home carrier identifier and is sent by the UE is received. Then, the home policy and charging system generates a service policy according to a preset policy parameter, and sends the service policy to the visited policy and charging system, so that the visited policy and charging system implements service control according to the service policy.

The following introduces execution methods of a HAF and an HPCRF in a home policy and charging system by using two embodiments.

FIG. 3 is a flowchart of a charging control method for a data service of a roaming subscriber according to Embodiment 3 of the present invention. As shown in FIG. 3, the method includes the following process:
Step 301: A HAF receives a charging rule request message from a VP-GW.

In this step, the foregoing charging rule request message is sent by the VP-GW to the HAF according to a home carrier identifier after a service request message that includes the home carrier identifier and is sent by a UE is received.

Step 302: The HAF sends a charging parameter to an HPCRF.

In this step, the HAF sends the charging parameter to the HPCRF, so that the HPCRF generates a charging rule according to the charging parameter and sends the charging rule to a VPCRF, and a VPCEF implements charging according to the charging rule that is forwarded by the VPCRF.

On the basis of the foregoing technical solution, further, the method may further include the following steps: Step 1: The HAF receives a service policy request message from the VP-GW. In this step, the service policy request message is sent by the VP-GW to the HAF according to the home carrier identifier after the service request message that includes the home carrier identifier and is sent by the UE is received. Step 2: The HAF sends a policy parameter to the HPCRF. In this step, the HAF sends the policy parameter to the HPCRF, so that the HPCRF generates a service policy according to the policy parameter and sends the service policy to the VPCRF, and the VPCEF implements service control according to the service policy that is forwarded by the VPCRF.

In Embodiment 3 of the present invention, when a UE is in a roaming state, a VP-GW sends a charging rule request message to a HAF of the UE; and a home carrier generates a charging rule and then forwards the charging rule to a visited carrier for implementing charging, so that charging can be performed in a charging manner agreed between the UE and the home carrier, thereby improving charging accuracy.

FIG. 4 is a flowchart of a charging control method for a data service of a roaming subscriber according to Embodiment 4 of the present invention. As shown in FIG. 4, the method includes the following process:
Step 401: An HPCRF receives a charging parameter from a HAF.

In this step, the HPCRF receives the charging parameter from the HAF, where the charging parameter is sent by the HAF to the HPCRF after a charging rule request message sent by a VP-GW is received. The charging rule request message is sent by the VP-GW to the HAF according to a home carrier identifier after a service request message that includes the home carrier identifier and is sent by a UE is received.

Step 402: The HPCRF sends, to a VPCRF, a charging rule that is generated according to the charging parameter.

In this step, the HPCRF sends the charging rule to the VPCRF, so that a VPCEF implements charging according to the charging rule that is forwarded by the VPCRF.

In Embodiment 4 of the present invention, when a UE is in a roaming state, a VP-GW sends a charging rule request message to a HAF of the UE; and a home carrier generates a charging rule and then forwards the charging rule to a visited carrier for implementing charging, so that charging can be performed in a charging manner agreed between the UE and the home carrier, thereby improving charging accuracy.

The charging control method in the present invention may be applied to an application scenario in which a UE accesses a virtual SIM server to use a data service, for example, the UE downloads a virtual SIM card from the virtual SIM server. When the UE in a roaming state accesses the virtual SIM server, a charging control method for a data service of a roaming subscriber includes:
Step 1: A VP-GW receives a service request message from a UE, where the service request message includes a home carrier identifier and a service identifier.
Step 2: If the VP-GW determines, according to the service identifier, that a data service corresponding to the service request message needs to access a virtual SIM server, the VP-GW sends a charging rule request message to a home policy and charging system according to the home carrier identifier, so that the home policy and charging system generates a charging rule and sends the charging rule to a visited policy and charging system, and the visited policy and charging system implements charging according to the charging rule.
Step 3: The VP-GW exchanges data between the UE and the virtual SIM server.
Step 2 and step 3 in the foregoing may be performed simultaneously.

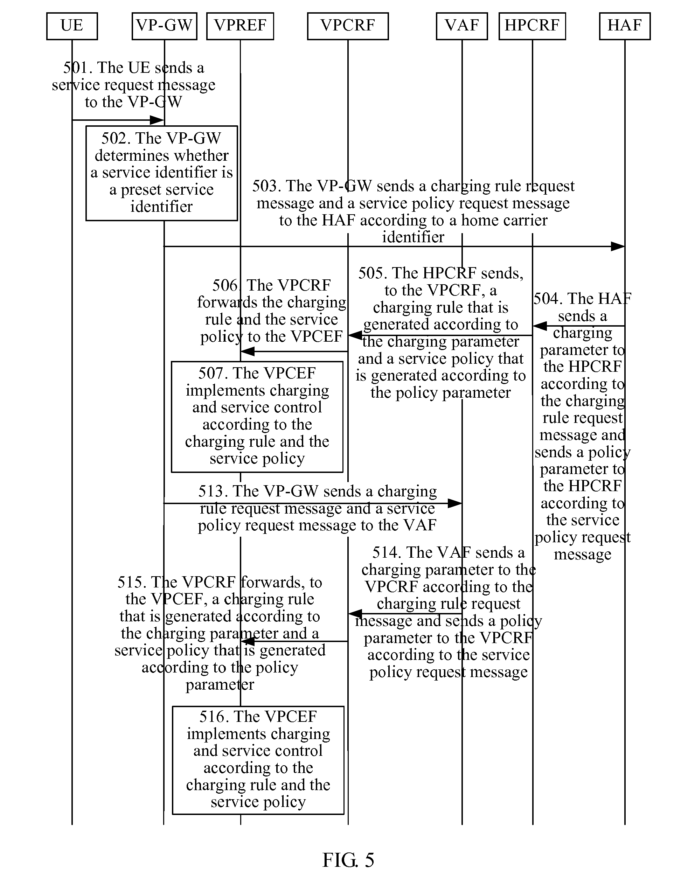

FIG. 5 is a signaling flowchart of a charging control method for a data service of a roaming subscriber according to Embodiment 5 of the present invention. As shown in FIG. 5, the method includes the following process:
Step 501: A UE sends a service request message to a VP-GW.

In this step, the UE sends the service request message to the VP-GW, where the service request message includes at least a home carrier identifier. Further, the service request message may further include a service identifier. Further, the service request message may further include service-related information, such as a uniform resource locator (Uniform Resource Locator, URL for short) of a service server or an Internet Protocol (Internet Protocol, IP for short) address of a service server. Specifically, using an example in which the UE accesses a virtual SIM server to download a virtual SIM card, the service request message may include: the home carrier identifier, a service identifier corresponding to a service accessed by the virtual SIM server, and a URL or an IP address of the virtual SIM server.

Step 502: The VP-GW determines whether a service identifier is a preset service identifier.

If yes, step 503 is performed. Otherwise, step 513 is performed, and charging is performed according to an existing charging control method for a data service of a roaming subscriber.

In this step, at least one service identifier is preset, and the preset service identifier indicates that charging control needs to be performed on the service by a home carrier. After receiving the service request message, the VP-GW determines whether the service identifier in the service request message is the preset service identifier. If yes, it indicates that charging control needs to be performed by the home carrier and step 503 is performed; and if no, it indicates that charging control does not need to be performed by the home carrier, and charging may be performed according to the existing charging control method for a data service of a roaming subscriber, and then step 513 is performed.

Step 503: The VP-GW sends a charging rule request message and a service policy request message to a HAF according to a home carrier identifier.

In this step, specifically, the VP-GW learns the HAF according to the home carrier identifier and sends the charging rule request message and the service policy request message to the HAF. The charging rule request message and the service policy request message may both include a service identifier. Further, the charging rule request message and the service policy request message may both further include service-related information. Specifically, still using the example in which the UE accesses the virtual SIM server to download the virtual SIM card, the charging rule request message and the service policy request message may both include: a service identifier corresponding to a service accessed by the virtual SIM server, and a URL or an IP address of the virtual SIM server.

In a specific implementation manner of this step, the charging rule request message and the service policy request message may be sent to the HAF by using a same message, for example, by using the service request message. The VP-GW sends the service request message to the HAF according to the home carrier identifier, where the service request message includes the foregoing service identifier and service-related information. By means of sending the service request message to the HAF, content of the charging rule request message and content of the service policy request message are sent at a time.

In another specific implementation manner of this step, the charging rule request message and the service policy request message may be sent to the HAF by using two messages, where the charging rule request message and the service policy request message both include the foregoing service identifier and service-related information.

In this step, a new interface may be established between the VP-GW and the HAF to send the charging rule request message and the service policy request message; or an existing security gateway interface (SGi) that is used for connection and communication between the VP-GW and the HAF may be expanded, so that an expanded SGi interface includes all content of the charging rule request message and the service policy request message, and the charging rule request message and the service policy request message are sent by using the expanded SGi interface.

Step 504: The HAF sends a charging parameter to an HPCRF according to the charging rule request message and sends a policy parameter to the HPCRF according to the service policy request message.

In this step, after receiving the charging rule request message, the HAF sends the charging parameter to the HPCRF according to the charging rule request message. The HAF may acquire the charging parameter according to the service identifier and the service-related information in the charging rule request message. Specifically, still using the example in which the UE accesses the virtual SIM server to download the virtual SIM card, the HAF may acquire, according to the service identifier corresponding to the service for accessing the virtual SIM server and the URL or the IP address of the virtual SIM server, a charging parameter corresponding to the virtual SIM card to be downloaded, where the service identifier and the URL or the IP address are in the charging rule request message. For example, if the UE signs a virtual SIM card service agreement with the home carrier in advance, and a manner of charging the UE for using a virtual SIM card service is stipulated in the agreement, then in this step, the HAF acquires, according to a stipulation in the service agreement, a charging parameter corresponding to the virtual SIM card service and sends the charging parameter to the HPCRF. If the agreement stipulates that the UE downloads a virtual SIM card without charge, the HAF sends a charging-free parameter to the HPCRF.

In this step, after receiving the service policy request message, the HAF sends the policy parameter to the HPCRF according to the service policy request message. The HAF may acquire the policy parameter according to the service identifier and the service-related information in the service policy request message. Specifically, still using the example in which the UE accesses the virtual SIM server to download the virtual SIM card, a policy parameter corresponding to the virtual SIM card to be downloaded is preset on the HAF. In this step, the HAF may acquire, according to the service identifier corresponding to the service for accessing the virtual SIM server and the URL or the IP address of the virtual SIM server, the policy parameter corresponding to the virtual SIM card to be downloaded, where the service identifier and the URL or the IP address are in the service policy request message; and send the policy parameter to the HPCRF.

Step 505: The HPCRF sends, to a VPCRF, a charging rule that is generated according to the charging parameter and a service policy that is generated according to the policy parameter.

In this step, the HPCRF generates the charging rule according to the charging parameter sent by the HAF; generates the service policy according to the policy parameter sent by the HAF; and then sends the charging rule and the service policy to the VPCRF. Specifically, a charging rule corresponding to each charging parameter and a service policy corresponding to each policy parameter are preset on the HPCRF, and the HPCRF acquires a charging rule and a service policy according to the charging parameter and the policy parameter that are acquired from the HAF and the foregoing preset correspondence.

In this step, policy and charging rules functions of both carriers are connected by using an Rx interface. The HPCRF may use the Rx interface to send the foregoing charging rule and service policy to the VPCRF.

Step 506: The VPCRF forwards the charging rule and the service policy to a VPCEF.

Step 507: The VPCEF implements charging and service control according to the charging rule and the service policy.

If in step 502, the VP-GW determines that the service identifier in the service request message sent by the UE is not a preset service identifier, it indicates that a service currently requested by the UE is not a service for which charging is controlled by the home carrier, and then charging is performed according to the existing charging control method for a data service of a roaming subscriber. In this embodiment of the present invention, only one specific implementation manner in the prior art is described as an example. In another implementation manner, any other existing charging control method for a data service of a roaming subscriber may also be used. Specifically, in this embodiment of the present invention, if in step 502, the VP-GW determines that the service identifier in the service request message sent by the UE is not a preset service identifier, the following step 513 to step 516 are performed.

Step 513: The VP-GW sends a charging rule request message and a service policy request message to a VAF.

Step 514: The VAF sends a charging parameter to a VPCRF according to the charging rule request message and sends a policy parameter to the VPCRF according to the service policy request message.

Step 515: The VPCRF forwards, to a VPCEF, a charging rule that is generated according to the charging parameter and a service policy that is generated according to the policy parameter.

Step 516: The VPCEF implements charging and service control according to the charging rule and the service policy.

In Embodiment 5 of the present invention, when a UE is in a roaming state, a VP-GW sends a charging rule request message to a HAF of the UE; and a home carrier generates a charging rule and then forwards the charging rule to a visited carrier for implementing charging, so that charging can be performed in a charging manner agreed between the UE and the home carrier, thereby improving charging accuracy. In addition, the VP-GW further sends a service policy request message to the HAF of the UE; and the home carrier generates a service policy and then forwards the service policy to the visited carrier for execution, so that the service can be executed according to a service policy agreed between the UE and the home carrier, thereby improving accuracy of service execution.

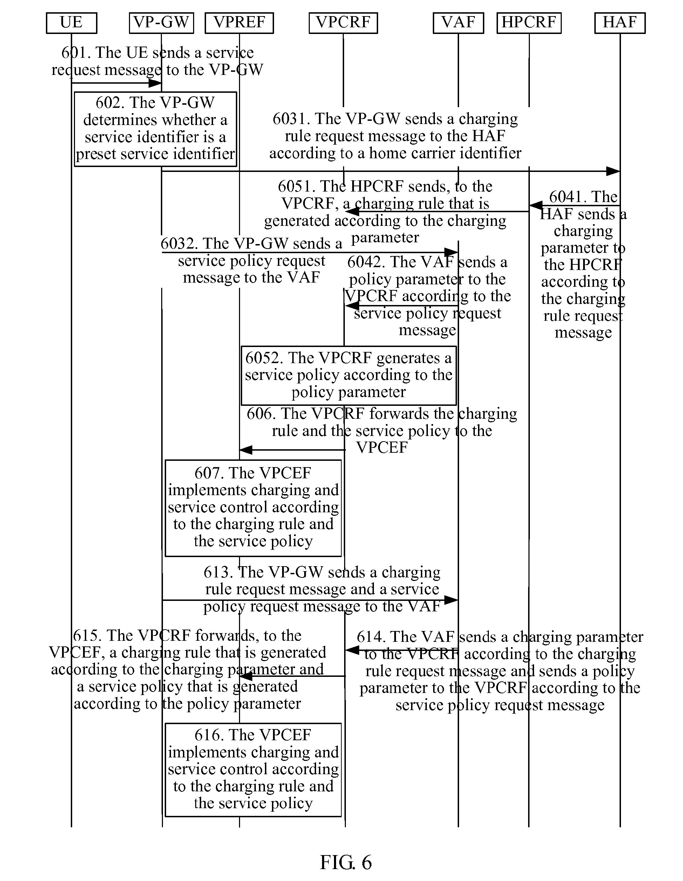

FIG. 6 is a signaling flowchart of a charging control method for a data service of a roaming subscriber according to Embodiment 6 of the present invention. As shown in FIG. 6, the method includes the following process:
Step 601: A UE sends a service request message to a VP-GW.

In this step, the UE sends the service request message to the VP-GW, where the service request message includes at least a home carrier identifier. Further, the service request message may further include a service identifier. Further, the service request message may further include service-related information, such as a URL of a service server or an IP address of a service server. Specifically, using an example in which the UE accesses a virtual SIM server to download a virtual SIM card, the service request message may include: the home carrier identifier, a service identifier corresponding to a service accessed by the virtual SIM server, and a URL or an IP address of the virtual SIM server.

Step 602: The VP-GW determines whether a service identifier is a preset service identifier.

If yes, step 6031 and step 6032 are performed. Specifically, a sequence of performing step 6021 and step 6032 is not limited. The two steps may be performed simultaneously, or may be performed in any sequence. Otherwise, step 613 is performed, and charging is performed according to an existing charging control method for a data service of a roaming subscriber.

In this step, at least one service identifier is preset, and the preset service identifier indicates that charging control needs to be performed on the service by a home carrier. After receiving the service request message, the VP-GW determines whether the service identifier in the service request message is the preset service identifier. If yes, it indicates that charging control needs to be performed by the home carrier, and step 6031 and step 6032 are performed; and if no, it indicates that charging control does not need to be performed by the home carrier, and charging may be performed according to the existing charging control method for a data service of a roaming subscriber, and then step 613 is performed.

Step 6031: The VP-GW sends a charging rule request message to a HAF according to a home carrier identifier.

In this step, specifically, the VP-GW learns the HAF according to the home carrier identifier and sends the charging rule request message to the HAF. The charging rule request message may include a service identifier. Further, the charging rule request message may further include service-related information. Specifically, still using the example in which the UE accesses the virtual SIM server to download the virtual SIM card, the charging rule request message may include: a service identifier corresponding to a service accessed by the virtual SIM server, and a URL or an IP address of the virtual SIM server.

In this step, a new interface may be established between the VP-GW and the HAF to send the charging rule request message; or an existing SGi interface may be expanded, so that an expanded SGi interface includes all content of the charging rule request message, and the charging rule request message is sent by using the expanded SGi interface.

Step 6041 is performed after step 6031.

Step 6041: The HAF sends a charging parameter to an HPCRF according to the charging rule request message.

In this step, after receiving the charging rule request message, the HAF sends the charging parameter to the HPCRF according to the charging rule request message. The HAF may acquire the charging parameter according to the service identifier and the service-related information in the charging rule request message. Specifically, still using the example in which the UE accesses the virtual SIM server to download the virtual SIM card, the HAF may acquire, according to the service identifier corresponding to the service for accessing the virtual SIM server access and the URL or the IP address of the virtual SIM server, a charging parameter corresponding to the virtual SIM card to be downloaded, where the service identifier and the URL or the IP address are in the charging rule request message. For example, if the UE signs a virtual SIM card service agreement with the home carrier in advance, and a manner of charging the UE for using a virtual SIM card service is stipulated in the agreement, then in this step, the HAF acquires, according to a stipulation in the service agreement, a charging parameter corresponding to the virtual SIM card service and sends the charging parameter to the HPCRF. If the agreement stipulates that the UE downloads a virtual SIM card without charge, the HAF sends a charging-free parameter to the HPCRF.

Step 6051 is performed after step 6041.

Step 6051: The HPCRF sends, to a VPCRF, a charging rule that is generated according to the charging parameter.

In this step, the HPCRF generates the charging rule according to the charging parameter sent by the HAF, and then sends the charging rule to the VPCRF. Specifically, a charging rule corresponding to each charging parameter is preset on the HPCRF, and the HPCRF acquires a charging rule according to the charging parameter that is acquired from the HAF and the foregoing preset correspondence.

In this step, PCRFs of both carriers are connected by using an Rx interface. The HPCRF may use the Rx interface to send the foregoing charging rule to the VPCRF.

Step 606 is performed after step 6051.

Step 6032: The VP-GW sends a service policy request message to a VAF.

In this step, specifically, the VP-GW sends the service policy request message to the VAF. The service policy request message may include a service identifier. Further, the service policy request message may further include service related-information. Specifically, still using the example in which the UE accesses the virtual SIM server to download the virtual SIM card, the service policy request message may include: a service identifier corresponding to a service accessed by the virtual SIM server, and a URL or an IP address of the virtual SIM server.

In this step, the service policy request message may be sent by using an existing interface between the VP-GW and the VAF.

Step 6042 is performed after step 6032.

Step 6042: The VAF sends a policy parameter to a VPCRF according to the service policy request message.

In this step, after receiving the service policy request message, the VAF sends the policy parameter to the VPCRF according to the service policy request message. The VAF may acquire the policy parameter according to the service identifier and the service-related information in the service policy request message. Specifically, still using the example in which the UE accesses the virtual SIM server to download the virtual SIM card, a policy parameter corresponding to the virtual SIM card to be downloaded is preset on the VAF. In this step, the VAF may acquire, according to the service identifier corresponding to the service for accessing the virtual SIM server and the URL or the IP address of the virtual SIM server, the policy parameter corresponding to the virtual SIM card to be downloaded, where the service identifier and the URL or the IP address are in the service policy request message; and send the policy parameter to the VPCRF.

Step 6052 is performed after step 6042.

Step 6052: The VPCRF generates a service policy according to the policy parameter.

In this step, the VPCRF generates the service policy according to the policy parameter sent by the VAF. Specifically, a service policy corresponding to each policy parameter is preset on the VPCRF, and the VPCRF acquires a service policy according to the policy parameter that is acquired from the VAF and the foregoing preset correspondence.

Step 606 is performed after step 6052.

Step 606: The VPCRF forwards the charging rule and the service policy to a VPCEF.

Specifically, in step 6051, the VPCRF acquires the charging rule from the HPCRF, and in step 6052, the VPCRF generates the service policy. In this step, the VPCRF may first determine whether the charging rule and the service policy are successfully acquired. After it is determined that the charging rule and the service policy are successfully acquired, the charging rule and the service policy are combined, and the charging rule and the service policy that are combined are forwarded to the VPCEF.

Step 607: The VPCEF implements charging and service control according to the charging rule and the service policy.

If in step 602, the VP-GW determines that the service identifier in the service request message sent by the UE is not a preset service identifier, it indicates that a service currently requested by the UE is not a service for which charging is controlled by the home carrier, and then charging is performed according to the existing charging control method for a data service of a roaming subscriber. In this embodiment of the present invention, only one specific implementation manner in the prior art is described as an example. In another implementation manner, any other existing charging control method for a data service of a roaming subscriber may also be used. Specifically, in this embodiment of the present invention, if in step 602, the VP-GW determines that the service identifier in the service request message sent by the UE is not a preset service identifier, the following step 613 to step 616 are performed.

Step 613: The VP-GW sends a charging rule request message and a service policy request message to a VAF.

Step 614: The VAF sends a charging parameter to a VPCRF according to the charging rule request message and sends a policy parameter to the VPCRF according to the service policy request message.

Step 615: The VPCRF forwards, to a VPCEF, a charging rule that is generated according to the charging parameter and a service policy that is generated according to the policy parameter.

Step 616: The VPCEF implements charging and service control according to the charging rule and the service policy.

In Embodiment 6 of the present invention, when a UE is in a roaming state, a VP-GW sends a charging rule request message to a HAF of the UE; and a home carrier generates a charging rule and then forwards the charging rule to a visited carrier for implementing charging, so that charging can be performed in a charging manner agreed between the UE and the home carrier, thereby improving charging accuracy. In addition, the VP-GW sends a service policy request message to a VAF at a location where the UE is currently roaming; and the visited carrier generates a service policy, so that the service can be executed according to a service policy that is set by the visited carrier, thereby improving flexibility of service execution.

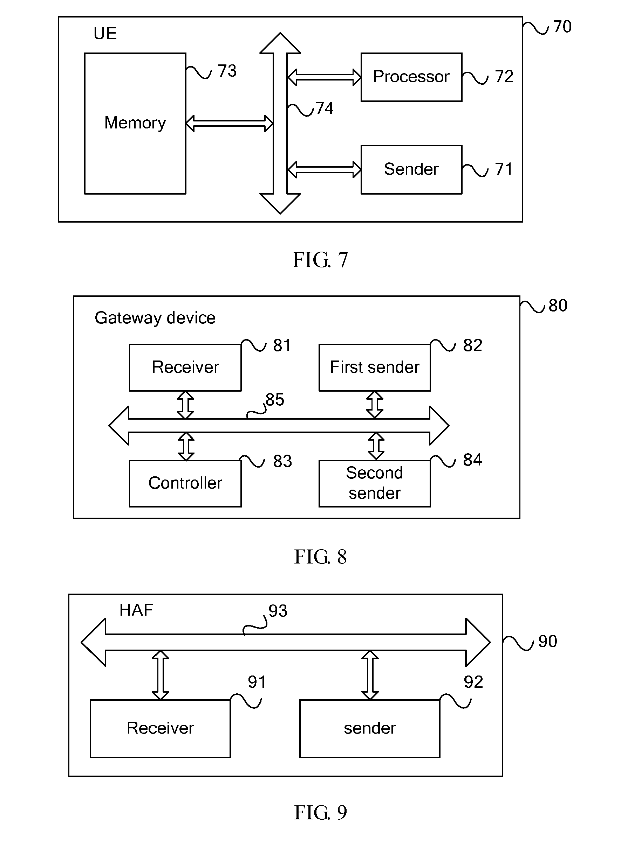

FIG. 7 is a schematic structural diagram of a UE according to Embodiment 7 of the present invention. As shown in FIG. 7, the UE 70 includes at least: a sender 71 and a processor 72. Further, the UE may further include a memory 73. All components of the UE are interconnected by using a bus system 74.

The processor 72 is configured to generate a service request message, where the service request message includes a home carrier identifier.

The sender 71 is configured to send the service request message to a VP-GW, so that the VP-GW sends a charging rule request message to a home policy and charging system according to the home carrier identifier, the home policy and charging system generates a charging rule and sends the charging rule to a visited policy and charging system. and the visited policy and charging system implements charging according to the charging rule. Specifically, to enable the VP-GW to send the charging rule request message to a HAF according to the home carrier identifier, the HPCRF generates a charging rule according to a charging parameter from the HAF and sends the charging rule to a VPCRF, and a VPCEF implements charging according to the charging rule that is forwarded by the VPCRF.

On the basis of the foregoing technical solution, further, the service request message generated by the processor 72 further includes a service identifier, so that the VP-GW determines, before sending the charging rule request message to the home policy and charging system according to the home carrier identifier, whether the service identifier is a preset service identifier, if yes, the VP-GW sends the charging rule request message to the home policy and charging system according to the home carrier identifier, and if no, the VP-GW sends the charging rule request message to the visited policy and charging system. Specifically, the service request message further includes the service identifier, so that the VP-GW determines, before sending the charging rule request message to the HAF according to the home carrier identifier, whether the service identifier is a preset service identifier, if yes, the VP-GW sends the charging rule request message to the HAF according to the home carrier identifier, and and if no, the VP-GW sends the charging rule request message to a visited application function VAF.

The memory 73 may be configured to store the service request message generated by the processor 72. The sender 71 acquires the service request message from the memory 73 and sends the service request message.

The UE in Embodiment 7 of the present invention may be configured to execute the charging control method for a data service of a roaming subscriber described in Embodiment 1 of the present invention. For a specific implementation process and a technical effect, reference may be made to Embodiment 1 of the present invention, and details are not described herein again.

Next, a gateway device is introduced, and the gateway device may be specifically the VP-GW described in the foregoing embodiments of the present invention. FIG. 8 is a schematic structural diagram of a gateway device according to Embodiment 8 of the present invention. As shown in FIG. 8, the gateway device 80 includes at least: a receiver 81 and a first sender 82. Further, the gateway device may further include: a controller 83 and a second sender 84. The receiver 81, the first sender 82, the controller 83, and the second sender 84 are interconnected by using a bus system 85.

The receiver 81 is configured to receive a service request message from a UE, where the service request message includes a home carrier identifier.

The first sender 82 is configured to send a charging rule request message to a home policy and charging system according to the home carrier identifier, so that the home policy and charging system generates a charging rule and sends the charging rule to a visited policy and charging system, and the visited policy and charging system implements charging according to the charging rule. Specifically, the first sender 82 is configured to send the charging rule request message to a HAF according to the home carrier identifier, so that an HPCRF generates a charging rule according to a charging parameter from the HAF and sends the charging rule to a VPCRF, and a VPCEF implements charging according to the charging rule that is forwarded by the VPCRF.

On the basis of the foregoing technical solution, further, the service request message received by the receiver 81 further includes a service identifier. Accordingly, the VP-GW may further include: the controller 83 and the second sender 84. The controller 83 is configured to determine whether the service identifier is a preset service identifier; if yes, control the first sender to send, according to the home carrier identifier, the charging rule request message to the home policy and charging system; and if no, control the second sender to send the charging rule request message to the visited policy and charging system. Specifically, if yes, the controller 83 controls the first sender 82 to send, according to the home carrier identifier, the charging rule request message to the HAF; and if no, the controller 83 controls the second sender 84 to send the charging rule request message to a visited application function VAF.

On the basis of the foregoing technical solution, further, the first sender 82 is further configured to send a service policy request message to the home policy and charging system according to the home carrier identifier, so that the home policy and charging system generates a service policy and sends the service policy to the visited policy and charging system, and the visited policy and charging system implements service control according to the service policy. Specifically, the first sender 82 sends the service policy request message to the HAF according to the home carrier identifier, so that the HPCRF generates a service policy according to a policy parameter from the HAF and sends the service policy to the VPCRF, and the VPCEF implements service control according to the service policy that is forwarded by the VPCRF.

On the basis of the foregoing technical solution, further, the second sender 84 is further configured to send a service policy request message to the visited policy and charging system, so that the visited policy and charging system generates a service policy and the visited policy and charging system implements service control according to the service policy. Specifically, the second sender 84 sends the service policy request message to the VAF, so that the VPCRF generates a service policy according to a policy parameter from the VAF, and the VPCEF implements service control according to the service policy that is generate by the VPCRF.

The gateway device in Embodiment 8 of the present invention may be configured to execute the charging control method for a data service of a roaming subscriber described in Embodiment 2 of the present invention. For a specific implementation process and a technical effect, reference may be made to Embodiment 2 of the present invention, and details are not described herein again.

Further, the gateway device in the present invention may be applied to an application scenario in which a UE accesses a virtual SIM server to use a data service, for example, the UE downloads a virtual SIM card from the virtual SIM server. When a UE in a roaming state needs to access the virtual SIM server, the gateway device that executes the charging control method for a data service of a roaming subscriber in the present invention may include: a receiver, a controller, a sender, and a data exchanger.

The receiver is configured to receive a service request message from a UE, where the service request message includes a home carrier identifier and a service identifier.

The controller is configured to determine, according to the service identifier, whether a data service corresponding to the service request message needs to access a virtual SIM server.

The sender is configured to, when the data service corresponding to the service request message needs to access the virtual SIM server, send a charging rule request message to a home policy and charging system according to the home carrier identifier, so that the home policy and charging system generates a charging rule and sends the charging rule to a visited policy and charging system, and the visited policy and charging system implements charging according to the charging rule.

The data exchanger is configured to exchange data between the UE and the virtual SIM server.

FIG. 9 is a schematic structural diagram of a HAF according to Embodiment 9 of the present invention. As shown in FIG. 9, the HAF 90 includes at least: a receiver 91 and a sender 92, where the receiver 91 and the sender 92 are interconnected by using a bus system 903.

The receiver 91 is configured to receive a charging rule request message from a VP-GW, where the charging rule request message is sent by the VP-GW according to a home carrier identifier after a service request message that includes the home carrier identifier and is sent by a UE is received.

The sender 92 is configured to send a charging parameter to an HPCRF according to the charging rule request message, so that the HPCRF generates a charging rule according to the charging parameter and sends the charging rule to a VPCRF, and a VPCEF implements charging according to the charging rule that is forwarded by the VPCRF.

On the basis of the foregoing technical solution, further, the receiver 91 is further configured to receive a service policy request message from the VP-GW, where the service policy request message is sent by the VP-GW according to the home carrier identifier after the service request message that includes the home carrier identifier and is sent by the UE is received. Accordingly, the sender 92 is further configured to send a policy parameter to the HPCRF according to the service policy request message, so that the HPCRF generates a service policy according to the policy parameter and sends the service policy to the VPCRF, and the VPCEF implements service control according to the service policy that is forwarded by the VPCRF.

The HAF in Embodiment 9 of the present invention may be configured to execute the charging control method for a data service of a roaming subscriber described in Embodiment 3 of the present invention. For a specific implementation process and a technical effect, reference may be made to Embodiment 3 of the present invention, and details are not described herein again.

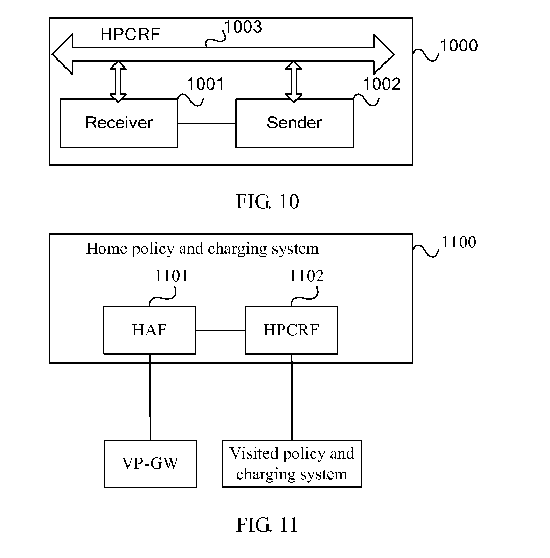

FIG. 10 is a schematic structural diagram of an HPCRF according to Embodiment 10 of the present invention. As shown in FIG. 10, the HPCRF 1000 includes at least: a receiver 1001 and a sender 1002, where the receiver 1001 and the sender 1002 are interconnected by using a bus system 1003.

The receiver 1001 is configured to receive a charging parameter from a HAF, where the charging parameter is sent by the HAF after a charging rule request message sent by a VP-GW is received. The charging rule request message is sent by the VP-GW to the HAF according to a home carrier identifier after a service request message that includes the home carrier identifier and is sent by a UE is received.

The sender 1002 is configured to send, to a VPCRF, a charging rule that is generated according to the charging parameter, so that a VPCEF implements charging according to the charging rule that is forwarded by the VPCRF.

The HPCRF in Embodiment 10 of the present invention may be configured to execute the charging control method for a data service of a roaming subscriber described in Embodiment 4 of the present invention. For a specific implementation process and a technical effect, reference may be made to Embodiment 4 of the present invention, and details are not described herein again.

FIG. 11 is a schematic structural diagram of a home policy and charging system according to Embodiment 11 of the present invention. As shown in FIG. 11, the home policy and charging system 1100 includes at least: a HAF 1101 and an HPCRF 1102.

The HAF 1101 is configured to receive a charging rule request message from a VP-GW, and send a charging parameter to the HPCRF 1102 according to the charging rule request message, where the charging rule request message is sent by the VP-GW according to a home carrier identifier after a service request message that includes the home carrier identifier and is sent by a UE is received.

The HPCRF 1102 is configured to generate a charging rule according to the charging parameter, and send the charging rule to a visited policy and charging system, so that the visited policy and charging system implements charging according to the charging rule.

On the basis of the foregoing technical solution, further, the HAF 1101 is further configured to receive a service policy request message from the VP-GW, and send a policy parameter to the HPCRF 1102 according to the service policy request message, where the service policy request message is sent by the VP-GW according to the home carrier identifier after the service request message that includes the home carrier identifier and is sent by the UE is received. Accordingly, the HPCRF 1102 is further configured to generate a service policy according to the policy parameter and send the service policy to the visited policy and charging system, so that the visited policy and charging system implements service control according to the service policy.

The home policy and charging system in Embodiment 11 of the present invention may be configured to execute the charging control methods for a data service of a roaming subscriber described in Embodiment 1 of the present invention to Embodiment 6 of the present invention. For a specific implementation process and a technical effect, reference may be made to Embodiment 1 of the present invention to Embodiment 6 of the present invention, and details are not described herein again.

It should be noted that, for brevity of description, the foregoing method embodiments are represented as a series of actions. However, persons skilled in the art should appreciate that the present invention is not limited to the described sequence of the actions, because according to the present invention, some steps may be performed in other sequences or simultaneously. It should be further appreciated by persons skilled in the art that the embodiments described in this specification all belong to exemplary embodiments, and the involved actions and modules are not necessarily required by the present invention.

In the foregoing embodiments, the description of each embodiment has respective focuses. For a part that is not described in detail in an embodiment, reference may be made to related descriptions in other embodiments.

Persons of ordinary skill in the art may understand that all or a part of the steps of the methods in the embodiments may be implemented by a program instructing relevant hardware. The program may be stored in a computer readable storage medium. When the program runs, the steps of the methods in the embodiments are performed. The storage medium may include any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof; however, these modifications or replacements do not make the essence of corresponding technical solutions depart from the scope of the technical solutions in the embodiments of the present invention.

## Claims

1. A charging control method of a data service of a roaming subscriber, comprising:
sending a service request message to a visited public data network gateway (VP-GW), wherein the service request message comprises a home carrier identifier, so that the VP-GW sends a charging rule request message to a home policy and charging system according to the home carrier identifier, the home policy and charging system generates a charging rule and sends the charging rule to a visited policy and charging system, and the visited policy and charging system implements charging according to the charging rule.

2. The method according to claim 1, wherein:
the service request message further comprises a service identifier, so that the VP-GW determines, before sending the charging rule request message to the home policy and charging system according to the home carrier identifier, whether the service identifier is a preset service identifier, and if yes, the VP-GW sends the charging rule request message to the home policy and charging system according to the home carrier identifier.

3. A charging control method of a data service of a roaming subscriber, comprising:
receiving a service request message from a user equipment (UE), wherein the service request message comprises a home carrier identifier; and
sending a charging rule request message to a home policy and charging system according to the home carrier identifier, so that the home policy and charging system generates a charging rule and sends the charging rule to a visited policy and charging system, and the visited policy and charging system implements charging according to the charging rule.

4. The method according to claim 3, wherein:
the service request message further comprises a service identifier; and
before the sending a charging rule request message to a home policy and charging system according to the home carrier identifier, the method further comprises: determining whether the service identifier is a preset service identifier, and if yes, executing the step of sending a charging rule request message to a home policy and charging system according to the home carrier identifier.

5. The method according to claim 3 or 4, after the receiving a service request message from a UE, further comprising:
sending a service policy request message to the home policy and charging system according to the home carrier identifier, so that the home policy and charging system generates a service policy and sends the service policy to the visited policy and charging system, and the visited policy and charging system implements service control according to the service policy.

6. The method according to claim 3 or 4, after the receiving a service request message from a UE, further comprising:
sending a service policy request message to the visited policy and charging system, so that the visited policy and charging system generates a service policy and implements service control according to the service policy.

7. A charging control method for a data service of a roaming subscriber, comprising:
receiving a charging rule request message from a visited public data network gateway (VP-GW), wherein the charging rule request message is sent by the VP-GW according to a home carrier identifier after a service request message that comprises the home carrier identifier and is sent by a user equipment UE is received; and
generating a charging rule according to a preset charging parameter, and sending the charging rule to a visited policy and charging system, so that the visited policy and charging system implements charging according to the charging rule.

8. The method according to claim 7, further comprising:
receiving a service policy request message from the VP-GW, wherein the service policy request message is sent by the VP-GW according to the home carrier identifier after the service request message that comprises the home carrier identifier and is sent by the UE is received; and
generating a service policy according to a preset policy parameter and sending the service policy to the visited policy and charging system, so that the visited policy and charging system implements service control according to the service policy.

9. A charging control method of a data service of a roaming subscriber, comprising:
receiving a service request message from a user equipment (UE), wherein the service request message comprises a home carrier identifier and a service identifier;
if it is determined, according to the service identifier, that a data service corresponding to the service request message needs to access a virtual subscriber identity module SIM server, sending a charging rule request message to a home policy and charging system according to the home carrier identifier, so that the home policy and charging system generates a charging rule and sends the charging rule to a visited policy and charging system, and the visited policy and charging system implements charging according to the charging rule; and
exchanging data between the UE and the virtual SIM server.

10. A user equipment UE, comprising:
a processor, configured to generate a service request message, wherein the service request message comprises a home carrier identifier; and
a sender, configured to send the service request message to a visited public data network gateway (VP-GW), so that the VP-GW sends a charging rule request message to a home policy and charging system according to the home carrier identifier, the home policy and charging system generates a charging rule and sends the charging rule to a visited policy and charging system, and the visited policy and charging system implements charging according to the charging rule.

11. The UE according to claim 10, wherein:
the service request message generated by the processor further comprises a service identifier, so that the VP-GW determines, before sending the charging rule request message to the home policy and charging system according to the home carrier identifier, whether the service identifier is a preset service identifier, and if yes, the VP-GW sends the charging rule request message to the home policy and charging system according to the home carrier identifier.

12. A gateway device, comprising:
a receiver, configured to receive a service request message from a user equipment UE, wherein the service request message comprises a home carrier identifier; and
a first sender, configured to send a charging rule request message to a home policy and charging system according to the home carrier identifier, so that the home policy and charging system generates a charging rule and sends the charging rule to a visited policy and charging system, and the visited policy and charging system implements charging according to the charging rule.

13. The gateway device according to claim 12, wherein:
the service request message received by the receiver further comprises a service identifier; and
the network gateway further comprises: a controller and a second sender, wherein the controller is configured to determine whether the service identifier is a preset service identifier, and if yes, control the first sender to send, according to the home carrier identifier, the charging rule request message to the home policy and charging system.

14. The gateway device according to claim 12 or 13, wherein:
the first sender is further configured to send a service policy request message to the home policy and charging system according to the home carrier identifier, so that the home policy and charging system generates a service policy and sends the service policy to the visited policy and charging system, and the visited policy and charging system implements service control according to the service policy.

15. The gateway device according to claim 12 or 13, wherein:
the second sender is further configured to send a service policy request message to the visited policy and charging system, so that the visited policy and charging system generates a service policy and the visited policy and charging system implements service control according to the service policy.

16. A home policy and charging system, comprising:
a home application function HAF, configured to receive a charging rule request message from a visited public data network gateway (VP-GW), and send a charging parameter to a home policy and charging rules function (HPCRF) according to the charging rule request message, wherein the charging rule request message is sent by the VP-GW according to a home carrier identifier after a service request message that comprises the home carrier identifier and is sent by a user equipment UE is received; and
the HPCRF, configured to generate a charging rule according to the charging parameter, and send the charging rule to a visited policy and charging system, so that the visited policy and charging system implements charging according to the charging rule.

17. The system according to claim 16, wherein:
the HAF is further configured to receive a service policy request message from the VP-GW, and send a policy parameter to the HPCRF according to the service policy request message, wherein the service policy request message is sent by the VP-GW according to the home carrier identifier after the service request message that comprises the home carrier identifier and is sent by the UE is received; and
the HPCRF is further configured to generate a service policy according to the policy parameter and send the service policy to the visited policy and charging system, so that the visited policy and charging system implements service control according to the service policy.

18. A gateway device, comprising:
a receiver, configured to receive a service request message from a user equipment UE, wherein the service request message comprises a home carrier identifier and a service identifier;
a controller, configured to determine, according to the service identifier, whether a data service corresponding to the service request message needs to access a virtual subscriber identity module SIM server;
a sender, configured to, when the data service corresponding to the service request message needs to access the virtual SIM server, send a charging rule request message to a home policy and charging system according to the home carrier identifier, so that the home policy and charging system generates a charging rule and sends the charging rule to a visited policy and charging system, and the visited policy and charging system implements charging according to the charging rule; and
a data exchanger, configured to exchange data between the UE and the virtual SIM server.
